(19) Europäisches Patentamt
European Patent Office
Office européen des brevets

(11) **EP 2 799 487 B1**

(12) **EUROPEAN PATENT SPECIFICATION**

(45) Date of publication and mention
of the grant of the patent:
**04.11.2015 Bulletin 2015/45**

(51) Int Cl.:
***C08L 23/08*** *(2006.01)*

(21) Application number: **13166121.7**

(22) Date of filing: **01.05.2013**

(54) **Composition**

Zusammensetzung

Composition

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Borealis AG**
**1220 Vienna (AT)**

(72) Inventors:
• **Tynys, Antti**
**4020 Linz (AT)**
• **Tyagi, Sandeep**
**4020 Linz (AT)**
• **Braun, Juliane**
**4020 Linz (AT)**
• **Liu, Yi**
**4209 Engerwitzdorf (AT)**
• **Kokko, Esa**
**01520 Vantaa (FI)**

(74) Representative: **Campbell, Neil Boyd**
**Dehns**
**St Bride's House**
**10 Salisbury Square**
**London**
**EC4Y 8JD (GB)**

(56) References cited:
**WO-A1-2007/042216      WO-A1-2013/060736
WO-A2-2007/022908**

• **SONG S ET AL: "Effect of small amount of ultra
high molecular weight component on the
crystallization behaviors of bimodal high density
polyethylene", POLYMER, ELSEVIER SCIENCE
PUBLISHERS B.V, GB, vol. 49, no. 12, 10 June
2008 (2008-06-10) , pages 2964-2973,
XP022703137, ISSN: 0032-3861, DOI:
10.1016/J.POLYMER.2008.04.050 [retrieved on
2008-05-02]**

**Description**

This invention concerns a multimodal polyethylene composition. In particular, the invention relates to a polyethylene composition comprising a high density multimodal polyethylene component and an ultrahigh molecular weight polyethylene copolymer component. The invention also covers articles, preferably pipes, made from the multimodal polyethylene composition and a process for making such a composition.

Multimodal polyethylene polymers are well known in the art. A multimodal polyethylene system typically comprises a high molecular weight (HMW) and a low molecular weight (LMW) component. The HMW component confers good mechanical properties to the system, whilst the LMW component provides good processability. Multimodal polyethylene systems have a wide range of useful practical applications, such as in the production of blow moulded articles films or pipes. Improved mechanical properties can be achieved by increasing the molecular weight of the HMW component. This, however, is usually at the cost of a loss in homogeneity resulting from an increase in the viscosity ratio between the HMW and LMW components, which can in turn actually be detrimental to the mechanical properties attained.

Further improved mechanical properties are possible by including an ultra high molecular weight (UHMW) fraction into a multimodal polyethylene system. There are serious compatibility problems however when such a high Mw species is added. For example, Ogunniyi et al (Journal of Applied Polymer Science, 2005, 97, 413-425) and Vadhar et al (Journal of Applied Polymer Science, 1986, 32, 5575-5584) both report the need for long blending times of the order of 15 minutes in a batch mixer when UHMW polyethylene was added to other polyethylenes.

The incorporation of HMW polyethylene into a polyethylene composition as a copolymer is also known and is reported in, for example, WO 2007/042216, WO 96/18677 and WO 2006/092378.

The inclusion of UHMW polyethylene into HDPE *via* extrusion has also been investigated and has been carried out using a co-rotating twin screw extruder by Huang and Brown (Polymer, 1992, 33, 2989-2997). However, although the UHMW polyethylene particles were found to be well bonded in the matrix and this helped to slow down the rate of crack propagation, when analysed under SEM, the UHMW polyethylene was found to remain in large separate domains with no evidence of "melting" into the HDPE matrix.

In WO94/28064, polyethylene compositions are reported comprising a UHMW component and a unimodal HDPE component.

The present inventors sought the preparation of a polymer blend with exellent impact properties. The blend should also have excellent processability and offer advantages in terms of mechanical properties such as in pipes.

The present inventors have found that the combination of a particular high density multimodal polyethylene polymer with low MFR and a particular copolymer ultra high molecular weight component can result in a blend which provides the necessary properties. The blends have excellent processability as seen through their shear thinning behaviour. They have excellent impact strength and offer advantageous properties in preventing slow crack growth and brittle failure. Moreover, these components can surprisingly be blended together to give homogeneous blends which possess excellent impact strength without losses of tensile modulus. Their homogeneity is evidenced by the excellent shear thinning behaviour.

**Summary of Invention**

Thus, viewed from a first aspect the invention provides a high density polyethylene blend, comprising

(A) 70 to 98 wt% of a high density multimodal polyethylene component having a density of at least 940 $kg/m^3$ and an $MFR_5$ of less than 1.0 g/10min; and
(B) 2 to 20 wt% of an ultra-high molecular weight polyethylene copolymer having an intrinsic viscosity of at least 7 dl/g and an $MFR_{21}$ of less than 0.5 g/10min (UHMW polyethylene copolymer);

and wherein said blend has an $MFR_{21}$ of 0.5 to 10.0 g/10min and a density of at least 940 $kg/m^3$.

Viewed from another aspect the invention provides a high density polyethylene blend, comprising

(A) 70 to 98 wt% of a high density multimodal polyethylene component having a density of at least 940 $kg/m^3$ and an $MFR_5$ of less than 1.0 g/10min; and
(B) 2 to 20 wt% of an ultra-high molecular weight polyethylene copolymer having a nominal viscosity molecular weight Mv of at least 800,000 g/mol and an $MFR_{21}$ of 0.5 g/10min or less (UHMW polyethylene);

and wherein said blend has an $MFR_{21}$ of 0.5 to 10.0 g/10min and a density of at least 940 $kg/m^3$.

Viewed from another aspect the invention provides a high density polyethylene blend, comprising

(A) 70 to 98 wt% of a high density multimodal polyethylene component having a density of at least 940 $kg/m^3$ and

an $MFR_5$ of less than 1.0 g/10min; and
(B) 2 to 20 wt% of an ultra-high molecular weight polyethylene copolymer having a weight average molecular weight Mw of at least 700,000 g/mol and a $MFR_{21}$ of 0.5 g/10min or less (UHMW polyethylene);

and wherein said blend has an $MFR_{21}$ of 0.5 to 10.0 g/10min and a density of at least 940 kg/m$^3$.

The homogeneous polymer blends of the current invention are well suited for use in pipes for various purposes, such as fluid transport, e.g. transport of liquids or gases such as water or natural gas is known. It is common for the fluid to be pressurised in these pipes.

Thus viewed from a further aspect, the invention provides an article, preferably a pipe, comprising the polymer blend as hereinbefore described.

Viewed from another aspect the invention provides a process for the preparation of a blend as hereinbefore defined comprising mixing

(A) 70 to 98 wt% of a high density multimodal polyethylene component having a density of at least 940 kg/m$^3$ and an $MFR_5$ of less than 1.0 g/10min; and
(B) 2 to 20 wt% of an ultra-high molecular weight polyethylene copolymer having a nominal viscosity molecular weight Mv of at least 800,000 g/mol and an $MFR_{21}$ of 0.5 g/10min or less (UHMW polyethylene);

and extruding or kneading the same so as to form a blend having an $MFR_{21}$ of 0.5 to 10.0 g/10min or less and a density of at least 940 kg/m$^3$.

Viewed from another aspect the invention provides a process for the preparation of a blend as hereinbefore defined comprising mixing

(A) 70 to 98 wt% of a high density multimodal polyethylene component having a density of at least 940 kg/m$^3$ and an $MFR_5$ of less than 1.0 g/10min; and
(B) 2 to 20 wt% of an ultra-high molecular weight polyethylene copolymer having an intrinsic viscosity of at least 7 dl/g and an $MFR_{21}$ of less than 0.5 g/10min (UHMW polyethylene copolymer);

and extruding or kneading the same so as to form a blend having an $MFR_{21}$ of 0.5 to 10.0 g/10min or less and a density of at least 940 kg/m$^3$.

Viewed from another aspect the invention provides the use of the blend as hereinbefore defined in the manufacture of an article, especially a pipe.

## Detailed Description of Invention

The tests for any claimed parameter are given in the "analytical tests" section of the text which precedes the examples.

Wherever the term "molecular weight Mw" is used herein, the weight average molecular weight is meant. Wherever the term "molecular weight Mv" is used herein, the nominal viscosity molecular weight is meant.

The polyethylene blend of the invention comprises at least two components: a high density multimodal polyethylene component, and an ultra-high molecular weight polyethylene copolymer component. Taken together these form the polyethylene blend of the invention. In all embodiments, the blend is an HDPE, i.e. one having a density of at least 940 kg/m$^3$.

The blend may further include an ultra-high molecular weight polyethylene homopolymer component as herein defined. When present, the blend properties below are measured based on the presence of this component.

## Blend Properties

The properties of the blend are reported below. The parameters which follow may be measured in the presence of standard additives that are inherently present in commercial polymers which may be used to manufacture the blends of the invention.

The polyethylene blend of the invention preferably has a density according to ISO 1183 at 23°C of at least 940 kg/m$^3$, preferably at least 942 kg/m$^3$. The upper limit for density may by 970 kg/m$^3$, preferably 965 kg/m$^3$, especially 962 kg/m$^3$. A highly preferred density range 942 to 962 kg/m$^3$, especially 945 to 959 kg/m$^3$.

The $MFR_{21}$ according to ISO 1133 of the polyethylene blend of the invention is preferably in the range of 0.1 to 15 g/10 min, preferably 0.5 to 10.0 g/10min, especially 1.0 to 8.0 g/10min.

The polyethylene blend preferably has an $MFR_5$ of less than 1.0 g/10min, preferably less than 0.5 g/10min, ideally less than 0.25 g/10min.

The polydispersity index (PI) of the polyethylene blends of the invention is preferably in the range 0.5 to 8 Pa$^{-1}$, more preferably 1 to 7 Pa$^{-1}$.

The notched impact strength of the polyethylene blends of the invention is preferably greater than 30 kJ/m$^2$, more preferably greater than 35 kJ/m$^2$, even more preferably greater than 40 kJ/m$^2$, when measured at 0 °C.

The tensile modulus of the blends of the invention is preferably higher than 85% of the value of component (A) on its own, especially higher than 90%. The tensile modulus of the blends of the invention may therefore be at least 950 MPa, such as at least 1000 MPa, preferably at least 1050 MPa.

Tan $\delta$ values of the blends of the invention may be at least 0.0300 measured at -25°C, such as at least 0.0310. When measured at -20°C, values may be at least 0.0320, such as 0.0325 or more.

The SHI2.7/210 value is preferably at least 120, preferably at least 130.

**High Density Multimodal Polyethylene Component**

The blend of the invention includes a high density multimodal polyethylene component, i.e. one having a density of at least 940 kg/m$^3$. The term "multimodal" means herein, unless otherwise stated, multimodality with respect to molecular weight distribution and includes therefore a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

Component (A) of the blend of the invention is a high density multimodal polyethylene and is preferably present in an amount of 75 to 95 wt%, such as 77 to 93 wt%, preferably 80 to 90 wt% of the blend.

The multimodal polyethylene component (A) of the invention preferably has a density according to ISO 1183 at 23°C of at least 940 kg/m$^3$, preferably at least 945 kg/m$^3$. The upper limit for density may by 980 kg/m$^3$, preferably 975 kg/m$^3$, especially 970 kg/m$^3$. A highly preferred density range is 945 to 965 kg/m$^3$.

The MFR$_{21}$ according to ISO 1133 of the multimodal polyethylene of the invention is preferably in the range of 1 to 20 g/10min, preferably 2 to 15 g/10 min. Preferably the multimodal polyethylene component (A) has an MFR$_{21}$ of 3 to 12 g/10min.

The MFR$_5$ according to ISO 1133 of the multimodal polyethylene component (A) of the invention is less than 1.0 g/10min, such as less than 0.5 g/10min.

Component (A) preferably has a M$_w$ of at least 70,000 g/mol, more preferably at least 120,000 g/mol. The Mw of the Component (A) should be less than 400,000 g/mol, preferably less than 300,000 g/mol.

The Mw/Mn of component (A) may be at least 4, such as at least 10, such as 10 to 30.

In all embodiments of the invention, it is preferable if component (A) is a multimodal polyethylene comprising at least (i) a lower weight average molecular weight (LMW) ethylene homopolymer or copolymer component, and (ii) a higher weight average molecular weight (HMW) ethylene homopolymer or copolymer component. Preferably, at least one of said LMW and HMW components is a copolymer of ethylene with at least one comonomer. It is preferred that at least said HMW component is an ethylene copolymer. Alternatively, if one of said components is a homopolymer, then said LMW is preferably the homopolymer.

Said LMW component of multimodal polymer preferably has a MFR$_2$ of at least 5 g/10 min, preferably at least 50 g/10 min, more preferably at least 100 g/10min.

The density of LMW component of said multimodal polymer may range from 950 to 980 kg/m$^3$, e.g. 950 to 970 kg/m$^3$.

The LMW component of said multimodal polymer may form from 30 to 70 wt%, e.g. 40 to 60% by weight of the multimodal polymer with the HMW component forming 70 to 30 wt%, e.g. 60 to 40% by weight. In one embodiment said LMW component forms 50 wt% or more of the multimodal polymer as defined above or below. Typically, the LMW component forms 45 to 55% and the HMW component forms 55 to 45% of the multimodal polymer.

The HMW component of said multimodal ethylene polymer has a lower MFR$_2$ than the LMW component.

The multimodal ethylene polymer of the invention may be an ethylene homopolymer or copolymer. By ethylene homopolymer is meant a polymer which is formed essentially only ethylene monomer units, i.e. is 99.9 wt% ethylene or more. It will be appreciated that minor traces of other monomers may be present due to industrial ethylene containing trace amounts of other monomers.

The multimodal ethylene polymer of the invention may also be a copolymer (and is preferably a copolymer) and can therefore be formed from ethylene with at least one other comonomer, e.g. C$_{3-20}$ olefin. Preferred comonomers are alpha-olefins, especially with 3-8 carbon atoms. Preferably, the comonomer is selected from the group consisting of propene, 1-butene, 1-hexene, 4-methyl-1-pentene, 1-octene, 1,7-octadiene and 7-methyl- 1,6-octadiene. The use of 1-hexene or 1-butene is most preferred.

The multimodal ethylene polymer of the invention can comprise one monomer or two monomers or more than 2 monomers. The use of a single comonomer is preferred. If two comonomers are used it is preferred if one is an C$_{3-8}$ alpha-olefin and the other is a diene as hereinbefore defined.

The amount of comonomer is preferably such that it comprises 0-3 mol%, more preferably 0.1-2.0 mol% and most preferably 0.1-1.5 mol% of the ethylene polymer. Values under 1.0 mol% are also envisaged, e.g. 0.1 to 1.0 mol%. These can be determined by NMR.

It is preferred however if the ethylene polymer of the invention comprises a LMW homopolymer component and a HMW ethylene copolymer component, e.g. an ethylene hexene copolymer or an ethylene butene copolymer.

For the preparation of the multimodal ethylene polymer of the present invention polymerisation methods well known to the skilled person may be used. It is within the scope of the invention for a multimodal, e.g. at least bimodal, polymers to be produced by blending each of the components *in-situ* during the polymerisation process thereof (so called in-situ process) or, alternatively, by blending mechanically two or more separately produced components in a manner known in the art.

Polyethylenes useful in the present invention is preferably obtained by in-situ blending in a multistage polymerisation process. Accordingly, polymers are obtained by in-situ blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the polyethylene polymer used in the blend of the invention are produced in at least two-stage polymerization using a single site catalyst or Ziegler Natta catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene.

The ethylene concentration in the first, preferably loop, reactor may be around 5 to 15 mol%, e.g. 7.5 to 12 mol%.

In the second, preferably gas phase, reactor, ethylene concentration is preferably much higher, e.g. at least 40 mol% such as 45 to 65 mol%, preferably 50 to 60 mol%.

Preferably, the first polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The reaction product is then transferred, preferably to continuously operating gas phase reactor. The second component can then be formed in a gas phase reactor using preferably the same catalyst.

The multimodal polyethylenes of the invention are commercial products and can be purchased from various suppliers.

## UHMW Copolymer Component

The blend of the invention further comprises component (B) an UHMW polyethylene copolymer component in an amount of 2 to 20 wt%. Preferably, this UHMWPE copolymer component comprises 3 to 15 wt%, such as 4 to 12 wt% of the blend. It will be appreciated that the UHMW component is different to the (A) component of the blend.

The comonomer present in this component is at least one C3-20 olefin. Preferred comonomers are alpha-olefins, especially with 3-8 carbon atoms. Preferably, the comonomer is selected from the group consisting of propene, 1-butene, 1-hexene, 4-methyl-1-pentene, 1-octene, 1,7-octadiene and 7-methyl- 1,6-octadiene. The use of 1-hexene or 1-butene is most preferred. Ideally only one comonomer is present. The use of hexene is especially preferred.

The comonomer content is preferably between 0.5 to 3 mol%. The amount of comonomer is generally tailored so as to achieve the intrinsic viscosity as required in the invention.

The UHMW polyethylene copolymer component of the blends of the invention preferably has a nominal viscosity molecular weight (Mv) of at least 800,000 g/mol, preferably at least 850,000 g/mol, more preferably at least 900,000 g/mol, especially at least 1,200,000 g/mol. In all embodiments, it is preferred if the UHMW polyethylene has a Mv of less than 4,200,000 g/mol, even more preferably less than 3,300,000 g/mol.

The UHMW PE copolymer component preferably has an intrinsic viscosity of at least 7 dl/g, preferably at least 9 dl/g, such as at least 12 dl/g, even at least 14 dl/g. The intrinsic viscosity of the UHMWPE copolymer component should preferably not exceed 24 dl/g, more preferably not exceed 22 dl/g. It will be appreciated that intrinsic viscosity is a measure of molecular weight in this field.

The UHMW polyethylene copolymer component of the blends of the invention preferably has a molecular weight (Mw) of at least 700,000 g/mol, preferably at least 800,000 g/mol.

The UHMWPE copolymer component is also preferably unimodal. This means that in has a single peak on GPC. Ideally it is formed from a single component and is therefore produced in a single manufacturing step.

The UHMWPE copolymer of the invention can be prepared by conventional processes. Preferably, the UHMWPE copolymer is prepared using a Ziegler-Natta catalyst. These UHMWPE copolymer are commercially available polymers.

The density of the UHMWPE copolymer component can be in the range 900 to 930 kg/m$^3$, preferably 905 to 925 kg/m$^3$.

This component has a very low MFR, such as an $MFR_{21}$ of less than 0.5 g/10min, especially $MFR_{21}$ of less than 0.1 g/10min, more especially less than 0.05 g/10min.

The UHMW copolymer component can be made using Zielger Natta catalysis, e.g. using vanadium tetrachloride, as described in the examples below. The UHMW copolymer is typically produced in the gas phase in the absence of hydrogen to ensure high Mw. For gas phase reactors, the reaction temperature used will generally be in the range 60 to 115°C, e.g. 70 to 110°C, the reactor pressure will generally be in the range 10 to 25 bar, and the residence time will generally be 1 to 8 hours.

## UHMW Homopolymer Component

The blend of the invention may further comprise component (C) an UHMW polyethylene homopolymer component in an amount of 1 to 20 wt%. Preferably, this UHMWPE component comprises 2 to 15 wt%, such as 3 to 10 wt% of the blend. It will be appreciated that the UHMW component is different to the (A) component of the blend.

In total, component (B) and (C) may form up to 25 wt% of the blend, such as 5 to 20 wt%, preferably 7 to 18 wt% of the blend.

Ideally there will be a larger wt% of the UHMW PE copolymer component than the UHMWPE homopolymer in blends of the invention. Viewed from another aspect therefore the invention provides:

a high density polyethylene blend, comprising

(A) 70 to 97 wt% of a high density multimodal polyethylene component having a density of at least 940 kg/m$^3$, and
(B) 2 to 20 wt% of an ultra-high molecular weight polyethylene copolymer having an intrinsic viscosity of at least 7 dl/g and an $MFR_{21}$ of less than 0.5 g/10min (UHMW polyethylene copolymer);
(C) 1 to 20 wt% of an ultra-high molecular weight polyethylene homopolymer having an intrinsic viscosity of at least 6 dl/g and an $MFR_{21}$ of less than 0.5 g/10min (UHMW polyethylene homopolymer);

and wherein said blend has an $MFR_{21}$ of 0.5 to 10.0 g/10min and a density of at least 940 kg/m$^3$.

The UHMW polyethylene homo component of the blends of the invention preferably has a nominal viscosity molecular weight (Mv) of at least 800,000 g/mol, preferably at least 850,000 g/mol, especially at least 950,000 g/mol. In all embodiments, it is preferred if the UHMW polyethylene has a Mv of less than 4,200,000 g/mol, even more preferably less than 3,300,000 g/mol.

The UHMW homopolymer component is preferably unimodal. This means that it has a single peak on GPC. Ideally it is formed from a single component and is therefore produced in a single manufacturing step.

The UHMW homopolymer polyethylene of the invention can be prepared by conventional processes. Preferably, the UHMW homopolymer polyethylene is prepared using a Ziegler-Natta catalyst. These homopolymers are commercially available polymers.

The density of the UHMW homopolymer component can be in the range 920 to 960 kg/m$^3$, preferably 930 to

950 kg/m$^3$.

This component has a very low MFR, such as an MFR$_{21}$ of less than 0.5 g/10min, especially MFR$_{21}$ of less than 0.1 g/10min, more especially less than 0.05 g/10min.

The intrinsic viscosity of the UHMW homopolymer component is at least 6 dl/g, preferably at least 7 dl/g such as at least 8 dl/g. The intrinsic viscosity of the UHMW homopolymer component should preferably not exceed 20 dl/g. It will be appreciated that intrinsic viscosity is a measure of molecular weight in this field.

**Preparation of Blend**

The blends of the invention may be prepared simply by mixing the components but to ensure homogeneity, it will be appreciated that the components have to be compounded. This can be achieved by any conventional method known to those skilled in the art, e.g. extrusion or kneading.

Where extrusion is used to prepare the blends of the invention, a second extrusion step may optionally be employed, e.g. under the same conditions as the first. It has been found that the use of two or more extrusion steps can improve homogeneity. In the context of blends comprising the UHMW polyethylene copolymer of the invention, the use of 3 extrusion steps or more are possible. Too many extrusion steps and the polymer can degrade. The use of 2 to 4 extrusions is ideal, e.g. 3 extrusions. This is called 3-pass herein.

Thus, viewed from another aspect the invention provides a process for the preparation of a blend as hereinbefore defined comprising mixing

(A) 70 to 97 wt% of a high density multimodal polyethylene component having a density of at least 940 kg/m$^3$, and
(B) 2 to 20 wt% of an ultra-high molecular weight polyethylene copolymer having an intrinsic viscosity of at least 7 dl/g and an MFR$_{21}$ of less than 0.5 g/10min (UHMW polyethylene copolymer); and optionally
(C) 1 to 20 wt% of an ultra-high molecular weight polyethylene homopolymer having an intrinsic viscosity of at least 6 dl/g and an MFR$_{21}$ of less than 0.5 g/10min (UHMW polyethylene homopolymer);

and extruding at least twice, such as three times, the same so as to form a blend having an MFR$_{21}$ of 0.5 to 10 g/10min and a density of at least 940 kg/m$^3$.

The use of extrusion to homogenise the compositions is preferred, in particular the use of a co-rotating twin extruder, such as ZSK 18 or ZSK 40.

The use of kneading (e.g. the use of a Haake kneader) is an alternative.

It will be appreciated that prior to forming the blend of the invention, the two polymer components of the invention may be blended with standard additives and adjuvants known in the art. It may also contain additional polymers, such as carrier polymers of the additive masterbatches. The properties of the components of the blend and the blend itself can be measured in the absence of or in the presence of any additives. It will be preferred if any additives are present however when properties are determined.

Additives of interest include antioxidants, pigments, fillers and UV stabilisers.

Carbon black is a generally used pigment, which also acts as an UV-screener. Typically carbon black is used in an amount of from 0.5 to 5 % by weight, preferably from 1.5 to 3.0 % by weight. Preferably the carbon black is added as a masterbatch where it is premixed with a polymer, preferably high density polyethylene (HDPE), in a specific amount. Suitable masterbatches are, among others, HD4394, sold by Cabot Corporation, and PPM1805 by Poly Plast Muller. Also titanium oxide may be used as an UV-screener.

**Multistage process**

The inventors have also surprisingly found that it is possible to prepare the blends of the invention in a multistage process, even those blends also comprising component (C). Accordingly, preferred polymers of the invention are obtainable by *in-situ* blending in a multistage, i.e. three or more stage, polymerization process. Those polymerisation steps may be based on solution, slurry or gas phase processes. Blends made in this fashion may generally show improved homogeneity and hence fewer white spots. They should also be cheaper to produce as all components are made in a single polymerisation process albeit with multiple steps.

Preferably, the polymer is produced in at least three-stage polymerization using the same catalyst in each step, e.g. a Ziegler-Natta catalyst. That catalyst is ideally transferred from step to step along with the reaction mixture so component (II) of the blend is generated in the presence of component (I) and so on. In order to prepare a blend of the invention involving

(A) 70 to 98 wt% of a high density multimodal polyethylene component having a density of at least 940 kg/m$^3$; and
(B) 2 to 20 wt% of an ultra-high molecular weight polyethylene copolymer;

a preferred reaction set up involves a loop reactor and two stage gas phase reactor process. Whilst the gas phase process is two stage, it can be carried out in one or two gas phase reactors. Preferably, the polymer blend is made using a slurry polymerization in a loop reactor followed by a two step gas phase polymerization in a gas phase reactor(s).

A loop reactor - gas phase reactor system is well known as Borealis technology, i.e. as a BORSTAR® reactor system.

The conditions used in such a process are well known and are discussed above.

It is generally preferred to generate a first low molecular weight component (of the multimodal HDPE) in the loop. The loop polymer and the catalyst used can then be transferred over to the gas phase reactor. The UHMW copolymer component is then preferably formed in the first gas phase step. That can then be followed by the formation of the HMW component (of the multimodal HDPE) in a second gas phase step. The UHMW copolymer is generated in the absence of hydrogen whilst hydrogen is used to generate the HMW component formed in the gas phase. Switching therefore from the first to the second gas phase reaction might just involve the addition of hydrogen.

The nature of the HDPE formed from the HMW and LMW components and the UHMW copolymer are as described above.

A prepolymeriation reactor may also be used, ideally to form the polymer (C), i.e. an UHMW homopolymer component. The UHMW homopolymer component might therefore be formed first in the process of the invention.

Viewed from another aspect therefore the invention provides a process for the preparation of a polymer blend having an $MFR_{21}$ of 0.5 to 10.0 g/10min and a density of at least 940 kg/m$^3$ said process comprising:

(I) polymerising ethylene in a loop reactor in the presence of a catalyst, e.g. a Ziegler Natta catalyst, so as to form a lower molecular weight component;

(II) transferring the reaction mixture from step (I) to a gas phase reactor and polymerising ethylene and at least one C3-8 alpha olefin in the presence of the lower molecular weight component and the catalyst and in the absence of hydrogen so as to form 2 to 20 wt% of a UHMW copolymer component; and

(III) after a period of time of, e.g. at least 1 minute, adding hydrogen to said gas phase reactor so as to form a HMW copolymer component so that the LMW and HMW components combined form 70 to 98 wt% of a high density multimodal polyethylene component.

There may be a flash step between loop and gas phase steps.

It is also possible to prepare a polymer (C) in a step before the formation of the LMW component. The formation of that UHMW homopolymer component can be effected in the presence of the catalyst which is then used in all subsequent steps to generate the HDPE and UHMW copolymer components. There may again be a flash step between prepolymerisation reactor and the loop process. Prepolymerisation is generally carried out at lower temperature than the main polymerisation such as 40 to 60°C.

Viewed from another aspect therefore the invention provides a process for the preparation of a polymer blend having an $MFR_{21}$ of 0.5 to 10.0 g/10min and a density of at least 940 kg/m$^3$ said process comprising:

(I) polymerising ethylene in the presence of a catalyst, e.g. a Ziegler Natta catalyst, so as to form 1 to 20 wt% of a UHMW homopolymer component;

(II) transferring the reaction mixture from step (I) to a loop reactor and polymerising ethylene in the presence of said catalyst, e.g. a Ziegler Natta catalyst, so as to form a lower molecular weight component;

(III) transferring the reaction mixture from step (II) to a gas phase reactor and polymerising ethylene and at least one C3-8 alpha olefin in the presence of the lower molecular weight component and the catalyst and in the absence of hydrogen so as to form 2 to 20 wt% of a UHMW copolymer component; and

(IV) after a period of time of, e.g. at least 1 minute, adding hydrogen to said gas phase reactor so as to form a HMW copolymer component so that the LMW and HMW components combined form 70 to 97 wt% of a high density multimodal polyethylene component.

The percentages of components in this embodiment are the same as those reported above.

Components (A) and (B) and optionally (C) in the polymer blend of the invention can be further blended with any other polymer of interest or used on its own as the only olefinic material in an article. Thus, the ethylene polymer of the invention can be blended with known HDPE, MDPE, LDPE, LLDPE polymers. Ideally however any article made from the ethylene polymer blend is the invention consists essentially of the polymer blend, i.e. contains the multimodal polyethylene component and the UHMWPE component(s) only.

**Applications**

The blends of the invention can be used to make all manner of articles such as cable sheathings, fibres, films and moulded articles. They are of primary interest in the formation of pipes. Pipes can be manufactured using various techniques such as RAM extrusion or screw extrusion.

It is a particular feature of the invention that the polymers may allow the formation of pipes with very good slow crack growth and FNCT (full notch creep test). FNCT is a measure of environmental stress cracking behaviour.

We have observed that the blends of the invention have excellent slow crack growth. This is because the beta relaxation (as measured as tan δ) is higher in the blends of the invention. Beta relaxation time reflects the mobility in the amorphous phase and a higher tan δ value indicates a longer failure time in FNCT.

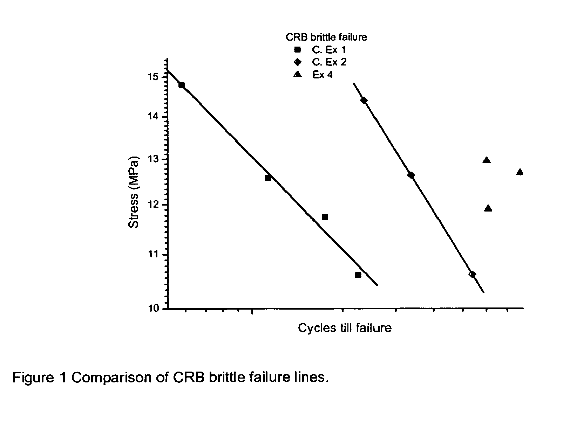

We also show that the blends of the invention have enhanced brittle failure performance. In brittle fracture, no apparent plastic deformation takes place before fracture. We show in figure 1 that the number of cycles before failure is increased with the blends of the invention over those based on a blend of HDPE and UHMW PE homopolymer.

It will be appreciated that the preferred features of the polymers of the invention as described herein can all be combined with each other in any way.

The invention will now be described with reference to the following non limiting examples and figures.

Figure 1 shows CRB brittle failure lines for blends of the invention vs comparative blends.

Figure 2 is the GPC curves of blends and components of the blends of the invention.

Figure 3 shows frequency sweep of copo-UHMWPE blend in comparison to homo UHMWPE blends and HE3490-LS-H (prepared by kneading).

**Analytical tests**

**Melt Flow Rate**

The melt flow rate (MFR) is determined according to ISO 1133 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

**Density**

Density of the polymer was measured according to ISO 1183 / 1872-2B.

**Molecular weight**

Molecular weight averages, molecular weight distribution (Mn, Mw, Mz MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} \left(\frac{A_i}{M_i}\right)} \quad (1)$$

$$M_w = \frac{\sum_{i=1}^{N} \left[ (A)_i \; x \; M_i \right)}{\sum_{i=1}^{N} A_i} \quad (2)$$

$$M_Z = \frac{\sum_{i=1}^{N}\left([A]_i \times M_i^2\right)}{\sum_{i=1}^{N}\left(\dfrac{A_i}{M_i}\right)} \qquad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g, \alpha_{PS} = 0.655$$

$$K_{PE} = 39 \times 10^{-3}\ mL/g, \qquad \alpha_{PE} = 0.725$$

$$K_{PP} = 19 \times 10^{-3}\ mL/g, \alpha_{PP} = 0.725$$

A third order polynomial fit was used to fit the calibration data. All samples were prepared in the concentration range of 0,5 -1 mg/ml and dissolved at 160 °C for 2.5 hours for PP or 3 hours for PE under continuous gentle shaking.

**Nominal viscosity molecular weight (Mv)** is calculated from the intrinsic viscosity $[\eta]$ according to ASTM D 4020 - 05

$$Mv = 5.37 \times 10^4 \times [\eta]^{1.37}$$

### Rheology

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad\qquad (1)$$

If the applied strain is within the linear viscoelastic regime, the resulting sinusoidal stress response can be given by

$$\sigma(t) = \sigma_0 \sin(\omega t + \delta)$$ (2)

where

$\sigma_D$ and $\gamma_D$ are the stress and strain amplitudes, respectively
$\omega$ is the angular frequency
$\delta$ the phase shift (loss angle between applied strain and stress response)
$t$ is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0} \cos \delta \quad [Pa]$$ (3)

$$G'' = \frac{\sigma_0}{\gamma_0} \sin \delta \quad [Pa]$$ (4)

$$G^* = G' + iG'' \quad [Pa]$$ (5)

$$\eta^* = \eta' - i\eta'' \quad [Pa.s]$$ (6)

$$\eta' = \frac{G''}{\omega} \quad [Pa.s]$$ (7)

$$\eta'' = \frac{G'}{\omega} \quad [Pa.s]$$ (8)

The values of storage modulus (G'), loss modulus (G"), complex modulus (G*) and complex viscosity ($\eta$*) were obtained as a function of frequency ($\omega$). Thereby, e.g. $\eta^*_{0.05\ rad/s}$ (eta*$_{0.05\ rad/s}$) is used as abbreviation for the complex viscosity at the frequency of 0.05 rad/s or $\eta^*_{300\ rad/s}$ (eta*$_{300\ rad/s}$) is used as abbreviation for the complex viscosity at the frequency of 300 rad/s.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of x kPa and can be described by equation 10.

$$EI(x) = G' \ for \ (G'' = x \ kPa) \ \text{[Pa]} \qquad (9)$$

For example, the EI (5kPa) is the defined by the value of the storage modulus G', determined for a value of G" equal to 5 kPa.

The determination of so-called Shear Thinning Indexes is done, as described in equation 10.

$$SHI(x/y) = (\ Eta^T * \ for \ (G^r* = x \ kPa))/(\ Eta^T * \ for \ (G^r* = y \ kPa)) \ ^r \ [\ Pa] \qquad (10)$$

For example, the $SHI_{(2.7/210)}$ is defined by the value of the complex viscosity, in Pa·s, determined for a value of G* equal to 2.7 kPa, divided by the value of the complex viscosity, in Pa·s, determined for a value of G* equal to 210 kPa. The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- *Interpolate y-values to x-values from parameter*" and the "*logarithmic interpolation type*" were applied.

The polydispersity index, *PI,* is defined by equation 11.

$$PI = \frac{10^5}{G'(\omega_{COP})} \ , \qquad \omega_{COP} = \ \omega \ for \ (G' = G'') \qquad (11)$$

where, $\omega_{COP}$ is the cross-over angular frequency, determined as the angular frequency for which the storage modulus, G' equals the loss modulus, G".

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995.).
[3] Definition of terms relating to the non-ultimate mechanical properties of polymers, Pure & Appl. Chem., Vol. 70, No. 3, pp. 701-754, 1998.

### Intrinsic viscosity

The reduced viscosity (also known as viscosity number), $\eta_{red}$, and intrinsic viscosity, $[\eta]$, of polyethylenes and polypropylenes are determined according to the ISO 1628-3: "Determination of the viscosity of polymers in dilute solution using capillary viscometers".

Relative viscosities of a diluted polymer solution (~1mg/ml) and of a pure solvent (decahydronaphthalene) are determined in an automated capillary viscometer (Lauda PVS1) equipped with 4 Ubbelohde capillaries placed in a thermostatic bath filled with silicone oil. The bath temperature is maintained at 135 °C. Each measuring stand is equipped with electronics to control pump, valve function, time measurement, meniscus detection and has a magnetic stirrer. The sample is weighed out and directly placed into the capillary. The capillary is filled with the exact volume of solvent by use of an automatic pipette. The sample is dissolved with constant stirring until complete dissolution is achieved (typically within 60-90min).

The efflux time of the polymer solution as well as of the pure solvent are measured several times until three consecutive readings do not differ for more than 0.1s (standard deviation).

The relative viscosity of the polymer solution is determined as the ratio of averaged efflux times in seconds obtained for both, polymer solution and solvent:

$$\eta_{rel} = \frac{t_{solution} - t_{solvent}}{t_{solvent}} \qquad \text{[dimensionless]}$$

Reduced viscosity ($\eta_{red}$) is calculated using the equation:

$$\eta_{red} = \frac{t_{solution} - t_{solvent}}{t_{solvent} * C} \qquad \text{[dl/g]}$$

where C is the polymer solution concentration at 135°C: $C = \frac{m}{V\gamma}$ .

and *m* is the polymer mass, *V* is the solvent volume, and $\gamma$ is the ratio of solvent densities at 20°C and 135°C ($\gamma = \rho_{20}/\rho_{135} = 1.107$).

The calculation of intrinsic viscosity [$\eta$] is performed by using the Schulz-Blaschke equation from the single concentration measurement:

$$[\eta] = \frac{\eta_{red}}{1 + K + C + \eta_{red}}$$

where K is a coefficient depending on the polymer structure and concentration. For calculation of the approximate value for [$\eta$], K=0.27.

## Quantification of comonomer content by FTIR spectroscopy

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 $\mu$m and spectra recorded in transmission mode.

Specifically, the ethylene content of a polypropylene-co-ethylene copolymer is determined using the baseline corrected peak area of the quantitative bands found at 720-722 and 730-733 cm[-1]. Specifically, the butene or hexene content of a polyethylene copolymer is determined using the baseline corrected peak area of the quantitative bands found at 1377-1379 cm[-1]. Quantitative results are obtained based upon reference to the film thickness.

## nIS

Charpy impact strength was determined according to ISO 179:2000 on V-notched samples of 80x10x4 mm[3] at 0 °C (nIS, 0°C). Samples were cut from plaques of 4 mm thickness prepared by compression molding according to ISO 293:2004 using the conditions defined in chapter 3.3 of ISO 1872-2:2007.

## Tensile modulus

As a measure for stiffness, the tensile modulus (E-modulus) of the compositions was measured at 23°C on compression moulded specimens according to ISO 527-2:1993. For samples prepared with the co-rotating twin screw extruder, the specimens were cut from plaques of 4 mm thickness prepared by compression molding according to ISO 1872-2: (type: 1B4 4mm), while those prepared with the kneader, the specimens were cut from plaques of 2 mm thickness (type: S2/5A 2mm). The modulus was measured at a speed of 1 mm/min.

## Stress at Yield:

Stress at yield (in MPa) was determined on the same samples according to ISO 527-2. The measurement was conducted at 23 °C temperature with an elongation rate of 50 mm/min.

## Accelerated FNCT :

Long-term stability as defined herein as Acc. FNCT in particular refers to a resistance against crack growth, which is determined in accordance with the test method FNCTNM5. The results as reported herein concerning FNCTNM5 are results obtained according to ISO16770 as carried out by Hessel Ingenieurtechnik, Am Vennstein 1a, 52159 Roetgen, Germany. The materials are tested at 90°C and 4 MPa in 2% aqueous "Netzmittel 5" (tenside used by Hessel Ingenieurtechnik). 3 specimens were tested for each material and the mean value is reported.

**DMTA - tan$\delta$:**

DMTA measurements were performed with Ares instrument in torsional mode according to ISO6721-1 (general principles) and ISO6721-7 (torsional vibration). The samples had a rectangular form with dimensions of 40x10x1 mm. The samples were cooled down to - 130°C and heated up with ramp rate of 2 K/min up to 160°C. At each 2 K temperature change a sinusoidal pulse of 1 Hz was applied and the response, storage (G') and loss (G") modulus and the loss tangent (tan$\delta$), was recorded versus temperature.

**Examples**

The following materials were used:

UHMW PE1 copolymer was synthesized as described below.
UHMW PE2 copolymer was synthesized as described below.
UHMW PE3 is a homopolymer purchased from Jingchem Corporation under the tradename UHMWPE M2. It has a Mv of 2,750,000 g/mol by ASTM 4020-81 (denoted in material info from the supplier).
UHMW PE4 copolymer was synthesized as described below.
UHMW PE5 homopolymer was purchased from Jingchem Corporation under the tradename UHMWPE GC001. It has a Mv of 1,150,000 g/mol by ASTM 4020-81 (denoted in material info from the supplier).
HE3490-LS-H is a commercial bimodal HDPE.

**Synthesis -Polymerization of copo-UHMWPE**

UHMW-PE1, UHMW-PE2 and UHMW-PE4 were all produced using a Vanadium based catalyst.

**ZN complex and catalyst preparation**

**Preparation of the Mg-alcoholate complex**

The Mg-alcoholate was prepared in a larger batch. About 24 kg of the Mg-alcoholate complex was produced. The Mg-alcoholate complex synthesis was started by adding 16,0 kg (472 g Mg, 19,42 mol Mg) of 20 % heptane solution of $(C_4H_9)_{1,5}Mg(C_8H_{17})_{0,5}$ (BOMAG, 2,95 % Mg) into a reactor at room temperature. To this solution 4,921 kg (37,79 mol) of 2-ethyl-hexanol (EHA) was added slowly at room temperature. The Mg/EHA molar ratio in this mixture was 1:2. The temperature was held at about room temperature and the reactants were allowed to react with each other for 108 min. 3,757 kg (52,1 mol) of n-pentane was added at room temperature to reduce viscosity and the Mg-alcoholate complex was allowed to stabilise for 120 min at 20 - 30 °C. After this the Mg-alcoholate solution is allowed to temperate back to room temperature. Analyses showed that the Mg-alcoholate complex had a concentration of 2,4 % Mg.

**Preparation of the carrier material**

4,76 1 (4,34 kg, 5,82 mol)of a ethyl-aluminium-dichloride (EADC) solution in toluene was added into a 20 1 reactor in inert conditions at room temperature and temperature was then adjusted to 10 °C and stirring to 300 rpm. 8,24 1 (6,23 kg, 5,82 mol) of magnesium-di-2-ethyl-hexanol ($Mg(OR)_2$) was added during 40 min to the reactor. Temperature was kept as close as possible to 10 °C trough out the addition of the Mg-alcoholate. After addition, temperature was increased to 60 °C and the reactants were allowed to react with each other at this temperature for 30 min. After this temperature was decreased down to 20 °C and the solids were allowed to settle for 2 h to a volume of 7 1. After this 6 1 of the clear solution was siphoned off. 6 1 of fresh heptanes was added The precipitate (carrier) was now washed for 20 min at room temperature after which it the carrier was allowed to settle 2 h to a volume of 7 1 after which 6 1 of the wash solution was siphoned off. The remaining 7 1 of carrier slurry was used as stock solution. The Mg content of the carrier slurry was 1.88 w-%.

**Preparation of the catalysts**

A diluted carrier-heptane slurry was created by adding 20 ml of heptane to the reactor containing 20.4 g of the carrier slurry (0.3835 g or 15.779 mmol Mg). To this slurry 1,52 g (7.8 mmol) of $VCl_4$ was added. Mixing rate was 360 rpm. The V/Mg molar ratio was 0,5. Right after addition of the vanadium compound the slurry become dark in colour. The temperature was increased to 65 °C and the reactants were allowed to react with each other for 2 h. After reaction the liquid was drawn off, and the catalyst was washed with 20 ml of heptane at 65 °C for 30 min and then with 20 ml of heptane at 65 °C for 10 min after which the catalyst was dried under a stream of nitrogen at 92°C for 1¼h. The chemical composition of the catalyst was: 8.53 w-% V, 8.14 w-% Mg, 3.66 w-% Al and 37.4 w-% Cl.

**Polymerization**

UHMW-PE1

Unimodal slurry copolymerisation was carried out in a 5L reactor and can be described as follows:

30.6 mg of catalyst was measured in a catalyst feeding cylinder in a glove box. 0.39 ml of 10% TIBA/heptane solution was measured in a cocatalyst feeding cylinder in a glove box. Al/Ti ratio was calculated to be 5:1.

Catalyst and cocatalyst cylinders were attached in series to each other having catalyst cylinder on top and attached in the polymerization reactor after inertising the connections. 2.4 L of propane was added at 20 °C in an empty reactor. 67.5 g of 1-hexene was added in the reactor. The reactor was heated to 85 °C. At this temperature reactor pressure reached 34.1 bar. Catalyst and cocatalyst were fed with a computer guided sequence in the polymerization reactor with 100 ml propane flushing. Polymerization was initiated immediately opening ethylene feed valve and the reactor was pressured to 39.1 bar. Polymerisation was stopped after 60min by venting off propane and monomer. Polymer yield was 134 g.

**UHMW-PE2**

Unimodal slurry copolymerisation was carried out in a 5L reactor and can be described as follows:

44.3 mg of catalyst was measured in a catalyst feeding cylinder in a glove box 0.54 ml of 10% TIBA/heptane solution was measured in a cocatalyst feeding cylinder in a glove box. Al/Ti ratio was calculated to be 5:1. Catalyst and cocatalyst cylinders were attached in series to each other having catalyst cylinder on top and attached in the polymerization reactor after inertising the connections. 2.4 L of propane was added at 20 °C in an empty reactor. 49.4 g of 1-hexene was added in the reactor. The reactor was heated to 85 °C. At this temperature reactor pressure reached 36.2 bar. Catalyst and cocatalyst were fed with a computer guided sequence in the polymerization reactor with 100 ml propane flushing. Polymerization was initiated immediately opening ethylene feed valve and the reactor was pressured to 39.1 bar. Polymerisation was stopped after 60min by venting off propane and monomer. Polymer yield was 145 g.

**UHMW-PE4**

Unimodal slurry copolymerisation was carried out in a 5L reactor and can be described as follows:

45.3 mg of catalyst was measured in a catalyst feeding cylinder in a glove box. 0.57 ml of 10% TIBA/heptane solution was measured in a cocatalyst feeding cylinder in a glove box. Al/Ti ratio was calculated to be 5:1. Catalyst and cocatalyst cylinders were attached in series to each other having catalyst cylinder on top and attached in the polymerization reactor after inertising the connections. 2.4 L of propane was added at 20 °C in an empty reactor. 67.4 g of 1-hexene was added in the reactor. The reactor was heated to 85 °C. At this temperature reactor pressure reached 34.1 bar. Catalyst and cocatalyst were fed with a computer guided sequence in the polymerization reactor with 100 ml propane flushing. Polymerization was initiated immediately opening ethylene feed valve and the reactor was pressured to 39.1 bar. Polymerisation was stopped after 60min by venting off propane and monomer. Polymer yield was 210 g.

**Table 1: properties of UHMW-PE and HE3490-LS-H**

| | Intr. viscosity dUg | C6 content mol% | MFR$_{21 \text{ g/10min}}$ | Density kg/m$^3$ | Mv | Mw |
|---|---|---|---|---|---|---|
| UHMW-PE1 | 16.3 | 1.8 | | 908 | 2,460,000 | 860,000 |
| UHMW-PE2 | 17.0 | 1.0 | | 912 | 2,600,000 | |
| UHMW-PE3 | 15.2 | 0 | | 933 | 2,230,000 | 760,000 |
| UHMW-PE4 | 17.0 | 1.6 | | 909 | 2,600,00 | 1,000,000 |
| UHMW-PE5 | 8.4 | 0 | 0.03 | 932 | 990,000 | 600,000 |
| HE3490-LSH | | 0.6 | 9 | 959 | | 200,000 |

All polymer blends and the reference examples of HE3490-LS-H were prepared using either a co-rotating TSE ZSK 18 extruder or a batch mixer (kneader). The batch mixing conditions employed were 230°C, 40 rpm for 8 mins. Conventional extrusion conditions using a co-rotating twin screw extruder were employed. Extrusion was carried out at 230 to 240°C and 120 rpm. Blends were extruded twice or three times using the same conditions.

The blends and their preparation approaches are summarized in Table 2. C. E stands for comparative example.

Table 2 Formulation of copo or homo-UHMWPE blends (balance HE3490-LS-H)

| | UHM WPE1 (wt%) | UHMWP E2 (wt%) | UHMWPE 3 (wt%) | UHMWPE 4 (wt%) | UHMWPE 5 (wt%) | |
|---|---|---|---|---|---|---|
| C.Ex 1 | | | | | | HE3490-LS-H 100% |
| C. Ex 2 | | | 10 | | | 3-pass extrusion |
| Ex 3 | 7 | | | | | Prepared via kneading |
| Ex 4 | | 10 | | | | 2-pass extrusion |
| C.Ex 5 | | | | | 10 | 2-pass extrusion |
| Ex 6 | | | | 5 | 10 | 3-pass extrusion |
| Ex 7 | | | | 5 | 10 | Prepared via kneading |
| C.Ex 8 | | | | | 5 | Prepared via kneading |
| C.Ex 9 | | | | | 10 | Prepared via kneading |

Table 3 Mechanical properties of UHMWPE blends

| Sample | Tensile modulus | Tensile stress at yield | Impact strength (0°C) | Density | Acc. FNCT * |
|---|---|---|---|---|---|
| | MPa | MPa | KJ/m$^2$ | kg/m$^3$ | H |
| C.Ex 1 | 1161.5 | 26.7 | 21.9 | 959.0 | 247 |
| C.Ex 2 | 1106.9 | 25.7 | 43.3 | 956.4 | |
| Ex 3 | 1078.4 | 25.1 | 35.2 | 955.4 | |
| Ex 4 | 1111.7 | 26.2 | 42.1 | 954.2 | |
| C.Ex 5 | 1102.0 | 25.9 | 33.2 | 956.5 | |
| Ex 6 | 1070.1 | 25.4 | 46.3 | 954.0 | >4262 |

(continued)

| Sample | Tensile modulus | Tensile stress at yield | Impact strength (0°C) | Density | Acc. FNCT * |
|---|---|---|---|---|---|
| | MPa | MPa | KJ/m$^2$ | kg/m$^3$ | H |
| Ex 7 | 1062.6 | 24.9 | 40.8 | 954.0 | |
| C.Ex 8 | 1101.7 | 26.3 | 21.6 | 957.8 | |
| C.Ex 9 | 1128.6 | 26.6 | 31.4 | 956.5 | |
| *Acc. FNCT: Accelerated FNCT results were obtained from Hessel. All materials were tested at 90°C and 4 MPa in 2% aqueous "Netzmittel 5" (an undisclosed tenside used exclusively by Hessel Ingenieurtechnik). For each material, 3 specimens were tested and the mean was recorded. | | | | | |

Table 4 Rheological properties

| Sample | PI | SHI2.7/210 * | MFR5 | MFR21 | FRR (21/5) |
|---|---|---|---|---|---|
| C.Ex 1 | 3.0 | 78.3 | 0.32 | 9.2 | 28.7 |
| C.Ex 2 | 3.6 | 113.9 | 0.07 | 3.52 | 50.3 |
| Ex 3 | 4.4 | 138 | 0.11 | 4.6 | 42 |
| Ex 4 | 4.6 | 183.2 | 0.05 | 3.2 | 64 |
| C.Ex 8 | 3.1 | 67 | 0.18 | 5.9 | 33 |
| C.Ex 9 | 2.8 | 57 | 0.12 | 3.5 | 29 |
| *All SHI2.7/210 data are calculated from extrapolation | | | | | |

Table 5 Tan$\delta$ of the UHMWPE blends and HE3490-LS-H at two temperatures

| Sample No. | Tan$\delta$ at -25°C | Tan$\delta$ at -20°C |
|---|---|---|
| C. Ex 1 | 0.0285 | 0.0298 |
| Ex 3 | 0.0322 | 0.0338 |
| C.Ex 5 | 0.0299 | 0.0313 |
| Ex 6 | 0.0311 | 0.0326 |

Brittle Failure results are shown in figure 1. Significant improvements are shown in CRB brittle failure.

**Discussion**

Significant improvement in impact strength is seen for all blends and this does not lead to significant loss in stiffness (Table 3). In figure 1 we show that homo-UHMWPE extends the brittle failure time of HE3490-LS-H while copo-UHMWPE further improves it, suggesting the advantage of copo-UHMWPE over homo-UHMWPE in enhancing slow crack growth performance (Figure 1).

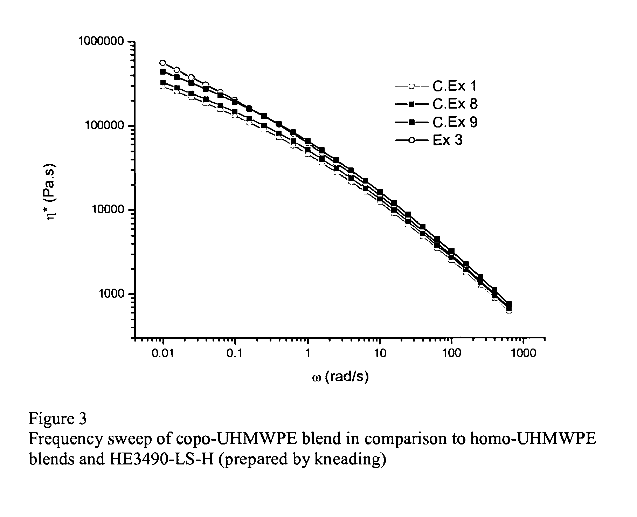

The copo-UHMWPE blends show pronounced shear thinning behaviour (Table 4) suggesting its advantage over homo-UHMWPE blend in maintaining processability of the material. This shear thinning behaviour is despite a much higher IV than UHMWPE5. The blends of the invention show even lower viscosity in the high frequency range, suggesting it is advantageous in maintaining processability. The improved rheology is shown in figure 3.

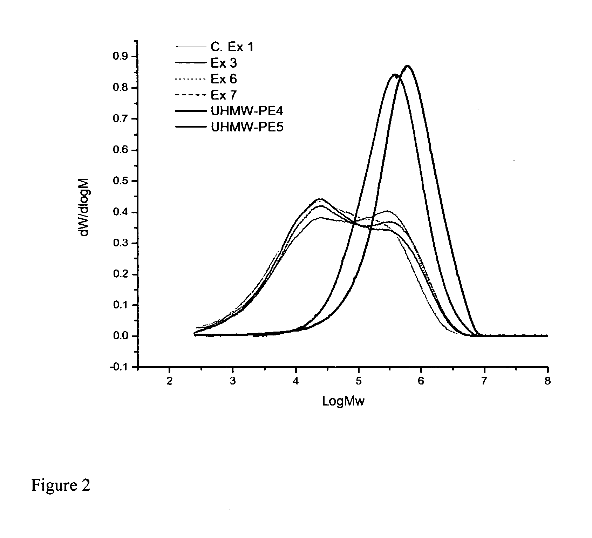

Figure 2 indicates the introduction of pronounced HMW tail by adding either copo-UHMWPE or mixture of homo/copo-UHMWPE.

A higher tan $\delta$ value around -25°C indicates a longer failure time in FNCT. The blends of the invention offer higher tan $\delta$ values and hence improved pipe performance.

A tan $\delta$ (-20°C) > 0.032 correlates to a failure time of nearly 10000 hours in notched pipe testing at 80°C and 9.2 bar. The blends of claim 1 therefore offer excellent pipe properties.

**In situ polymerization to generate blends of the invention**

A stirred 5L batch reactor was used for polymerization of trimodal/ tetramodal polymers. The reactor is operated with the SIEMENS SIMATIC BATCH process control system using WIN CC as process flow display software. For polymerization, BCD80E was used as catalyst and TEAL as the co-catalyst. BCD80E is an $MgCl_2$ supported catalyst commercially available from BASF. All catalyst and co-catalyst components were stored in a glove-box and prepared in the glove box for the polymerisation as well. Special designed metal tubes with Swagelok quick connects were used to inject the catalyst in the reactor.

The schematic multi step polymerisation process to achieve a PE material including both homo-UHMW and copo-(U)HMW is represented in the following scheme:

50°C → flash → 95°C → flash → 80°C → 85°C

prepoly → loop → GP no $H_2$ → GP

Table 6. Polymerization results of trimodal/tetramodal polymers

| | Ex | t (min) GP with no H2 | Split % | Yield (g) | Polymerization time (min) Loop/gas Prepoly/loop/gas | Activity kg PE/g*h | Production rate (kg/h) |
|---|---|---|---|---|---|---|---|
| *Trimodal* LMW+Copo-(U)HMW+HMW | 10 | 9 | ≈0:45:10:45 | 472.8 | 20+50 | 19.20 | 0.40 |
| *Tetramodal* homo-UHMW+ LMW+Copo-(U)HMW+HMW | 11 | 6.5 | ≈7:43:7:43 | 476.0 | 21+37+46.2 | 13.25 | 0.27 |
| | 12 | 4.5 | ≈11:51:5:33 | 461.0 | 28+37+35.5 | 13.20 | 0.27 |

The homo-UHMWPE in the tetramodal polymers was prepared in the first polymerisation step at 50°C and C2 partial pressure of 3 bars without $H_2$ feed. The homo-LMWPE was produced in the second polymerization step (for tetramodal polymers) or the first step (for trimodal polymer) at 95°C and C2 partial pressure of 6 bars, in presence of 42.5 liters' $H_2$. The copo-(U)HMW PE was produced after the slurry phase by starting the gas phase at 80°C without adding hydrogen, hence achieving the highest possible molecular weight in the given polymerisation conditions with 1-hexene as the comonomer. After 4.5-9 minutes, 250 ml hydrogen was introduced, the reactor temperature was raised to 85°C and the HMW copolymer fraction was produced. Table 7 summarizes the polymerization results of trimodal/tetramodal polymers.

Table 7 Properties of multi-modal polymers

| EX No. | Tensile modulus | Tensile stress at yield | Density | PI | MFR5 | MFR21 | FRR (21/5) | White Spot rating |
|---|---|---|---|---|---|---|---|---|
| | MPa | MPa | kg/m$^3$ | | g/10min | g/10min | | |
| 10 | 1070.7 | 24.50 | 955.20 | 4.18 | 0.14 | 5.65 | 40.36 | 0.17 |
| 11 | 1115.1 | 25.50 | 955.10 | - | 0.16 | 2.92 | 18.25 | 0.25 |
| 12 | 1303 | 28.10 | 959.90 | - | 0.01 | 2.33 | 233.00 | 0.0 |

Claims

1. A high density polyethylene blend, comprising

   (A) 70 to 98 wt% of a high density multimodal polyethylene component having a density of at least 940 kg/m$^3$, and an $MFR_5$ of less than 1.0 g/10min;
   (B) 2 to 20 wt% of an ultra-high molecular weight polyethylene copolymer, e.g. with a C3-8 alpha olefin, having an intrinsic viscosity of at least 7 dl/g and an $MFR_{21}$ of less than 0.5 g/10min (UHMW polyethylene copolymer);

   and wherein said blend has an $MFR_{21}$ of 0.5 to 10.0 g/10min and a density of at least 940 kg/m$^3$.

2. A high density polyethylene blend, comprising

   (A) 70 to 98 wt% of a high density multimodal polyethylene component having a density of at least 940 kg/m$^3$, and an $MFR_5$ of less than 1.0 g/10min; and
   (B) 2 to 20 wt% of an ultra-high molecular weight polyethylene copolymer, e.g. with a C3-8 alpha olefin, having a nominal viscosity molecular weight Mv of at least 800,000 g/mol and an $MFR_{21}$ of 0.5 g/10min or less (UHMW polyethylene);

   and wherein said blend has an $MFR_{21}$ of 0.5 to 10.0 g/10min and a density of at least 940 kg/m$^3$.

3. A blend as defined in claim 1 or 2, wherein component (A) is a bimodal HDPE.

4. A blend as defined in any preceding claim, wherein component (A) is a copolymer having 0.1 to 2 mol% comonomer.

5. A blend as defined in any preceding claim, wherein component (A) has an $MFR_{21}$ of 1-20 g/10min.

6. A blend as defined in any preceding claim, wherein component (A) comprises an ethylene homopolymer component and a butene or hexene ethylene copolymer component.

7. A blend as defined in any preceding claim, wherein component (A) is present in an amount of 80 to 90 wt%.

8. A blend as claimed in any preceding claim wherein the density of the blend is 942 to 962 kg/m$^3$.

9. A blend as claimed in any preceding claim wherein the UHMW copolymer has an IV of 14 dl/g or more.

**10.** A blend as claimed in any preceding claim wherein the UHMW copolymer has an Mv of 1,2000,000 g/mol or more.

**11.** A blend as claimed in any preceding claim comprising

(A) 70 to 97 wt% of a high density multimodal polyethylene component having a density of at least 940 kg/m$^3$, and an MFR$_5$ of less than 1.0 g/10min;
(B) 2 to 20 wt% of an ultra-high molecular weight polyethylene copolymer having a nominal viscosity molecular weight Mv of at least 800,000 g/mol and an MFR$_{21}$ of 0.5 g/10min or less (UHMW polyethylene); **or**
(B) 2 to 20 wt% of an ultra-high molecular weight polyethylene copolymer having an intrinsic viscosity of at least 7 dl/g and an MFR$_{21}$ of less than 0.5 g/10min (UHMW polyethylene copolymer); and
(C) 1 to 20 wt% of an ultra-high molecular weight polyethylene homopolymer having an intrinsic viscosity of at least 6 dl/g and an MFR$_{21}$ of less than 0.5 g/10min (UHMW polyethylene homopolymer).

**12.** A blend as claimed in any preceding claim wherein component (C) has an intrinsic viscosity of 8 dl/g or more.

**13.** A blend as claimed in any preceding claim wherein component (C) has a density of 930 to 950 kg/m$^3$.

**14.** A blend as defined in any preceding claim, wherein component (B) and/or (C) are prepared using a Ziegler-Natta catalyst.

**15.** An article, preferably a pipe, made from the polyethylene blend as defined in any preceding claim.

**16.** A process for the preparation of a polymer blend having an MFR$_{21}$ of 0.5 to 10.0 g/10min and a density of at least 940 kg/m$^3$ said process comprising:

(I) polymerising ethylene in a loop reactor in the presence of a catalyst, e.g. a Ziegler Natta catalyst, so as to form a lower molecular weight component;
(II) transferring the reaction mixture from step (I) to a gas phase reactor and polymerising ethylene and at least one C3-8 alpha olefin in the presence of the lower molecular weight component and the catalyst and in the absence of hydrogen so as to form 2 to 20 wt% of a UHMW copolymer component; and
(III) after a period of time of, e.g. at least 1 minute, adding hydrogen to said gas phase reactor so as to form a HMW copolymer component so that the LMW and HMW components combined form 70 to 98 wt% of a high density multimodal polyethylene component.

**17.** A process for the preparation of a blend as hereinbefore defined comprising mixing

(A) 70 to 97 wt% of a high density multimodal polyethylene component having a density of at least 940 kg/m$^3$, and
(B) 2 to 20 wt% of an ultra-high molecular weight polyethylene copolymer having an intrinsic viscosity of at least 7 dl/g and an MFR$_{21}$ of less than 0.5 g/10min (UHMW polyethylene copolymer); and optionally
(C) 1 to 20 wt% of an ultra-high molecular weight polyethylene homopolymer having an intrinsic viscosity of at least 6 dl/g and an MFR$_{21}$ of less than 0.5 g/10min (UHMW polyethylene homopolymer);

and extruding at least twice, such as three times, the same so as to form a blend having an MFR$_{21}$ of 0.5 to 10 g/10min and a density of at least 940 kg/m$^3$.

**Patentansprüche**

**1.** Mischung eines Polyethylens mit hoher Dichte, umfassend

(A) 70 bis 98 Gew.-% eines multimodalen Polyethylenbestandteils mit hoher Dichte, der eine Dichte von mindestens 940 kg/m$^3$ und einen MFR$_5$ von weniger als 1,0 g/10 min hat;
(B) 2 bis 20 Gew.-% eines Polyethylencopolymers mit ultrahohem Molekulargewicht, z. B. mit einem C3 - 8 alpha-Olefin, das eine intrinsische Viskosität von mindestens 7 dl/g und einen MFR$_{21}$ von weniger als 0,5 g/10 min hat (UHMW-Polyethylencopolymer);

und wobei die Mischung einen MFR$_{21}$ von 0,5 bis 10,0 g/10 min und eine Dichte von mindestens 940 kg/m$^3$ hat.

2. Mischung eines Polyethylens mit hoher Dichte, umfassend

(A) 70 bis 98 Gew.-% eines multimodalen Polyethylenbestandteils mit hoher Dichte, der eine Dichte von mindestens 940 kg/m$^3$ und einen MFR$_5$ von weniger als 1,0 g/10 min hat;
(B) 2 bis 20 Gew.-% eines Polyethylencopolymers mit ultrahohem Molekulargewicht, z. B. mit einem C3 - 8 alpha-Olefin, das ein Nennviskositäts-Molekulargewicht Mv von mindestens 800.000 g/mol und einen MFR$_{21}$ von 0,5 g/10 min oder weniger hat (UHMW-Polyethylen);

und wobei die Mischung einen MFR$_{21}$ von 0,5 bis 10,0 g/10 min und eine Dichte von mindestens 940 kg/m$^3$ hat.

3. Mischung nach Anspruch 1 oder 2, wobei der Bestandteil (A) ein bimodales HDPE ist.

4. Mischung nach einem der vorhergehenden Ansprüche, wobei der Bestandteil (A) ein Copolymer ist, das 0,1 bis 2 Mol-% Comonomer aufweist.

5. Mischung nach einem der vorhergehenden Ansprüche, wobei der Bestandteil (A) einen MFR$_{21}$ von 1 - 20 g/10 min hat.

6. Mischung nach einem der vorhergehenden Ansprüche, wobei der Bestandteil (A) einen Ethylenhomopolymerbestandteil und einen Buten- oder Hexen-Ethylencopolymerbestandteil umfasst.

7. Mischung nach einem der vorhergehenden Ansprüche, wobei der Bestandteil (A) mit einer Menge von 80 bis 90 Gew.-% vorliegt.

8. Mischung nach einem der vorhergehenden Ansprüche, wobei die Dichte der Mischung 942 bis 962 kg/m$^3$ ist.

9. Mischung nach einem der vorhergehenden Ansprüche, wobei das UHMW-Copolymer eine IV von 14 dl/g oder mehr hat.

10. Mischung nach einem der vorhergehenden Ansprüche, wobei das UHMW-Copolymer eine Mv von 1.200.000 g/mol oder mehr hat.

11. Mischung nach einem der vorhergehenden Ansprüche, umfassend

(A) 70 bis 97 Gew.-% eines multimodalen Polyethylenbestandteils mit hoher Dichte, der eine Dichte von mindestens 940 kg/m$^3$ und einen MFR$_5$ von weniger als 1,0 g/10 min hat;
(B) 2 bis 20 Gew.-% eines Polyethylencopolymers mit ultrahohem Molekulargewicht, das ein Nennviskositäts-Molekulargewicht Mv von mindestens 800.000 g/mol und einen MFR$_{21}$ von 0,5 g/10 min oder weniger hat (UHMW-Polyethylen); oder
(B) 2 bis 20 Gew.-% eines Polyethylencopolymers mit ultrahohem Molekulargewicht, das eine intrinsische Viskosität von mindestens 7 dl/g und einen MFR$_{21}$ von weniger als 0,5 g/10 min hat (UHMW-Polyethylencopolymer); und
(C) 1 bis 20 Gew.-% eines Polyethylenhomopolymers mit ultrahohem Molekulargewicht, das eine intrinsische Viskosität von mindestens 6 dl/g und einen MFR$_{21}$ von weniger als 0,5 g/10 min hat (UHMW-Polyethylenhomopolymer).

12. Mischung nach einem der vorhergehenden Ansprüche, wobei der Bestanteil (C) eine intrinsische Viskosität von 8 dl/g oder mehr hat.

13. Mischung nach einem der vorhergehenden Ansprüche, wobei der Bestandteil (C) eine Dichte von 930 bis 950 kg/m$^3$ hat.

14. Mischung nach einem der vorhergehenden Ansprüche, wobei der Bestandteil (B) und/oder (C) unter Verwendung eines Ziegler-Natta-Katalysators hergestellt wird/werden.

15. Artikel, vorzugsweise ein Rohr, das aus der Polyethylenmischung nach einem der vorhergehenden Ansprüche hergestellt ist.

16. Verfahren zum Herstellen einer Polymermischung, die einen MFR$_{21}$ von 0,5 bis 10.0 g/10 min und eine Dichte von

mindestens 940 kg/m$^3$ hat, wobei das Verfahren umfasst:

(I) Polymerisieren von Ethylen in einem Schlaufenreaktor in der Anwesenheit eines Katalysators, z. B. eines Ziegler-Natta-Katalysators, um einen Bestandteil mit niedrigerem Molekulargewicht zu bilden;

(II) Übertragen der Reaktionsmischung aus dem Schritt (I) in einen Gasphasenreaktor und Polymerisieren von Ethylen und mindestens einem C3 - 8 alpha-Olefin in der Anwesenheit des Bestandteil mit geringerem Molekulargewicht und des Katalysators und unter Abwesenheit von Wasserstoff, um 2 bis 20 Gew.-% eines UHMW-Copolymerbestandteils zu bilden; und

(III) nach einer Zeitspanne von z. B. mindestens 1 Minute, Zugeben von Wasserstoff zu dem Gasphasenreaktor, um einen HMW-Copolymerbestandteil zu bilden, sodass der LMW- und HMW-Bestandteil zusammen 70 bis 98 Gew.-% des multimodalen Polyethylenbestandteils mit hoher Dicht bilden.

**17.** Verfahren zum Herstellen einer Mischung wie sie voranstehend definiert ist, umfassend das Mischen von

(A) 70 bis 97 Gew.-% eines multimodalen Polyethylenbestandteils mit hoher Dichte, der eine Dichte von mindestens 940 kg/m$^3$ hat;

(B) 2 bis 20 Gew.-% eines Polyethylencopolymers mit ultrahohem Molekulargewicht, das eine intrinsische Viskosität von mindestens 7 dl/g und einen MFR$_{21}$ von weniger als 0,5 g/10 min hat (UHMW-Polyethylencopolymer); und optional

(C) 1 bis 20 Gew.-% eines Polyethylenhomopolymers mit ultrahohem Molekulargewicht, das eine intrinsische Viskosität von mindestens 6 dl/g und einen MFR$_{21}$ von weniger als 0,5 g/1 0 min hat (UHMW-Polyethylenhomopolymer);

und mindestens zweimaliges, wie zum Beispiel dreimaliges, Extrudieren der Mischung, um eine Mischung zu bilden, die eine MFR$_{21}$ von 0,5 bis 10 g/10 min und eine Dichte von mindestens 940 kg/m$^3$ hat.

## Revendications

**1.** Mélange de polyéthylène de haute densité, comprenant :

(A) 70 à 98 % en poids d'un composant de polyéthylène multimodal de haute densité ayant une masse volumique d'au moins 940 kg/m$^3$ et un MFR$_5$ inférieur à 1,0 g/10 min ;

(B) 2 à 20 % en poids d'un copolymère de polyéthylène de poids moléculaire ultra élevé, par exemple, avec une alpha-oléfine en C$_3$-C$_8$ ayant une viscosité intrinsèque d'au moins 7 dl/g et un MFR$_{21}$ inférieur à 0,5 g/10 min (copolymère de polyéthylène UHMW) ; et

dans lequel ledit mélange a un MFR$_{21}$ de 0,5 à 10 g/10 min et une masse volumique d'au moins 940 kg/m$^3$.

**2.** Mélange de polyéthylène de haute densité, comprenant :

(A) 70 à 98 % en poids d'un composant de polyéthylène multimodal de haute densité ayant une masse volumique d'au moins 940 kg/m$^3$ et un MFR$_5$ inférieur à 1,0 g/10 min ; et

(B) 2 à 20 % en poids d'un copolymère de polyéthylène de poids moléculaire ultra élevé, par exemple avec une alpha-oléfine en C$_3$-C$_8$, ayant un poids moléculaire en viscosité théorique Mv d'au moins 800 000 g/mole et un MFR$_{21}$ de 0,5 g/10 min ou moins (polyéthylène UHMW) ; et

dans lequel ledit mélange a un MFR$_{21}$ de 0,5 à 10,0 g/10 min et une masse volumique d'au moins 940 kg/m$^3$.

**3.** Mélange selon la revendication 1 ou la revendication 2, dans lequel le composant (A) est du HDPE bimodal.

**4.** Mélange selon l'une quelconque des revendications précédentes, dans lequel le composant (A) est un copolymère ayant 0,1 à 2 % en mole de comonomère.

**5.** Mélange selon l'une quelconque des revendications précédentes, dans lequel le composant (A) a un MFR$_{21}$ de 1 à 20 g/10 min.

**6.** Mélange selon l'une quelconque des revendications précédentes, dans lequel le composant (A) comprend un composant d'homopolymère d'éthylène et un composant de copolymère de butène ou d'hexène éthylène.

7. Mélange selon l'une quelconque des revendications précédentes, dans lequel le composant (A) est présent en quantité de 80 à 90 % en poids.

8. Mélange selon l'une quelconque des revendications précédentes, dans lequel la masse volumique du mélange est de 942 à 962 kg/m$^3$.

9. Mélange selon l'une quelconque des revendications précédentes, dans lequel le copolymère UHMW a un IV de 14 dl/g ou plus.

10. Mélange selon l'une quelconque des revendications précédentes, dans lequel le copolymère UHMW a un Mv de 1 200 000 g/mole ou plus.

11. Mélange selon l'une quelconque des revendications précédentes, comprenant :

(A) 70 à 97 % en poids d'un composant de polyéthylène multimodal de haute densité ayant une masse volumique d'au moins 940 kg/m$^3$ et un MFR$_5$ inférieur à 1,0 g/10 min ;
(B) 2 à 20 % en poids d'un copolymère de polyéthylène de poids moléculaire ultra élevé ayant un poids moléculaire en viscosité théorique Mv d'au moins 800 000 g/mole et un MFR$_{21}$ de 0,5 g/10 min ou moins (polyéthylène UHMW) ; ou
(B) 2 à 20 % en poids d'un copolymère de polyéthylène de poids moléculaire ultra élevé ayant une viscosité intrinsèque d'au moins 7 dl/g et un MFR$_{21}$ inférieur à 0,5 g/10 min (copolymère de polyéthylène UHMW) ; et
(C) 1 à 20 % en poids d'un homopolymère de polyéthylène de poids moléculaire ultra élevé ayant une viscosité intrinsèque d'au moins 6 dl/g et un MFR$_{21}$ inférieur à 0,5 g/10 min (homopolymère de polyéthylène UHMW).

12. Mélange selon l'une quelconque des revendications précédentes, dans lequel le composant (C) a une viscosité intrinsèque de 8 dl/g ou plus.

13. Mélange selon l'une quelconque des revendications précédentes, dans lequel le composant (C) a une masse volumique de 930 à 950 kg/m$^3$.

14. Mélange selon l'une quelconque des revendications précédentes, dans lequel le composant (B) et/ou le composant (C) est ou sont préparés en utilisant un catalyseur de Ziegler-Natta.

15. Article, de préférence un tuyau, constitué d'un mélange de polyéthylène selon l'une quelconque des revendications précédentes.

16. Procédé de préparation d'un mélange polymère ayant un MFR$_{21}$ de 0,5 à 10,0 g/10 min et une masse volumique d'au moins 940 kg/m$^3$, ledit procédé comprenant les étapes consistant à :

(I) polymériser de l'éthylène dans un réacteur en boucle en présence d'un catalyseur, par exemple un catalyseur de Ziegler-Natta, de manière à former un composant de poids moléculaire inférieur ;
(II) transférer le mélange réactionnel de l'étape (I) à un réacteur en phase gazeuse et polymériser l'éthylène et au moins une alpha-oléfine en C$_3$-C$_8$ en présence du composant de poids moléculaire inférieur et du catalyseur et en l'absence d'hydrogène de manière à former 2 à 20 % en poids d'un composant de copolymère UHMW ; et
(III) au bout d'une certaine période de temps, par exemple, au moins 1 minute, ajouter de l'hydrogène audit réacteur en phase gazeuse de manière à former un composant de copolymère HMW de sorte que les composants LMW et HMW forment en combinaison 70 à 98 % en poids d'un composant de polyéthylène multimodal de haute densité.

17. Procédé de préparation d'un mélange tel que défini ci-dessus, comprenant le mélange de :

(A) 70 à 97 % en poids d'un composant de polyéthylène multimodal de haute densité ayant une masse volumique d'au moins 940 kg/m$^3$ et
(B) 2 à 20 % en poids d'un copolymère de polyéthylène de poids moléculaire ultra élevé ayant une viscosité intrinsèque d'au moins 7 dl/g et un MFR$_{21}$ inférieur à 0,5 g/10 min (copolymère de polyéthylène UHMW) ; et éventuellement

(C) 1 à 20 % en poids d'un homopolymère de polyéthylène de poids moléculaire ultra élevé ayant une viscosité intrinsèque d'au moins 6 dl/g et un $MFR_{21}$ inférieur à 0,5 g/10 min (homopolymère de polyéthylène UHMW) ; et

l'extrusion au moins deux fois, notamment trois fois, du corps obtenu de manière à former un mélange ayant un $MFR_{21}$ de 0,5 à 10 g/10 min et une masse volumique d'au moins 940 kg/m$^3$.

Figure 1 Comparison of CRB brittle failure lines.

Figure 2

Figure 3
Frequency sweep of copo-UHMWPE blend in comparison to homo-UHMWPE
blends and HE3490-LS-H (prepared by kneading)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007042216 A
- WO 9618677 A
- WO 2006092378 A
- WO 9428064 A
- EP 517868 A

**Non-patent literature cited in the description**

- **OGUNNIYI et al.** *Journal of Applied Polymer Science,* 2005, vol. 97, 413-425
- **VADHAR et al.** *Journal of Applied Polymer Science,* 1986, vol. 32, 5575-5584
- **HUANG ; BROWN.** *Polymer,* 1992, vol. 33, 2989-2997
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754